# FASCICULE DE BREVET EUROPEEN

(11) **EP 2 344 726 B1**
(45) Date de publication et mention de la délivrance du brevet: **22.08.2012**
(21) Numéro de dépôt: 09817291.9
(22) Date de dépôt: 29.09.2009
(51) Int. Cl.: F01D 17/16, F01D 17/20, F02C 6/08, F02C 9/18, F02C 9/22

(54) **SYSTEME DE COMMANDE D'EQUIPEMENTS A GEOMETRIE VARIABLE D'UNE TURBOMACHINE, NOTAMMENT PAR GUIGNOLS**
SYSTEM ZUR STEUERUNG EINER ANLAGE MIT VARIABLER GEOMETRIE FÜR EINEN TURBINENMOTOR, IM BESONDEREN MITHILFE VON WINKELHEBELN
SYSTEM FOR CONTROLLING VARIABLE GEOMETRY EQUIPMENT FOR A TURBINE ENGINE, ESPECIALLY BY BELLCRANKS

(30) Priorité: 30.09.2008 FR 0856565
(43) Date de publication de la demande: 20.07.2011
(73) Titulaire: Snecma, 75015 Paris (FR)
(72) Inventeur: COLOTTE, Baptiste, Benoît, F-77000 MELUN (FR); GAULLY, Bruno, Robert, 91630 Marolles en Hurepoix (FR)
(74) Mandataire: Gevers France
(86) Numéro de dépôt international: PCT/EP2009/062621
(87) Numéro de publication internationale: WO 2010/037749

(56) Documents cités:
- EP-A- 1 398 464
- EP-A- 1 724 472
- WO-A-2007/116319
- DE-B- 1 224 563
- FR-A- 2 445 439
- FR-A- 2 633 046

## Description

La présente invention se rapporte au domaine général de la commande d'équipements à géométrie variable d'une turbomachine. L'invention concerne plus particulièrement l'optimisation de la commande de plusieurs équipements faisant partie de corps distincts de la turbomachine.

Par "équipement à géométrie variable", on entend ici un équipement relié à un organe de commande et dont la dimension, la forme, la position et/ou la vitesse est ou sont susceptible(s) d'être modifiée(s) en fonction d'événements détectés ou de paramètres définis, pour agir sur le fonctionnement de la turbomachine. Des exemples d'équipements à géométrie variable sont des vannes de décharge d'air du compresseur (à ouverture variable), des aubes fixes de compresseur à angle de calage variable, des aubes de turbine dont le jeu au sommet est variable, des pompes à carburant à débit variable, etc.

Le terme corps désigne classiquement un sous-ensemble d'une turbomachine, comportant comme organes principaux un compresseur et une turbine assemblés sur un même axe. Typiquement, une turbomachine peut comporter un corps haute pression et un corps basse pression. Chaque corps comporte un compresseur et une turbine, dont les aubes sont entraînées en rotation autour de l'axe de l'arbre sur lequel elles sont montées.

En général, les différents corps d'une turbomachine sont conçus pour pouvoir fonctionner de manière indépendante les uns des autres. Leurs vitesses de rotation sont indépendantes, même si elles peuvent être liées ou corrélées dans certains régimes de fonctionnement.

Aussi habituellement, du fait de cette indépendance entre les différents corps d'une turbomachine, pour commander des équipements à géométrie variable faisant partie de corps différents, on prévoit pour ces équipements distincts des systèmes de commande distincts. Pour cette raison, commander deux équipements à géométrie variable de deux corps distincts nécessite en général deux circuits de commande, deux actionneurs, deux sources de puissance, etc. Il s'ensuit que la masse, le coût et l'encombrement d'un tel système de commande des équipements sont relativement élevés. Une telle configuration est celle retenue dans la demande de brevet européen de la demanderesse, publiée sous le numéro EP 1724 472.

Par exemple, l'étage basse pression peut comporter une ou plusieurs vannes de décharge d'air (souvent désignées VBV, qui est l'acronyme de leur dénomination anglaise "Variable Bleed Valve"), tandis que l'étage haute pression peut comporter un ou plusieurs étages d'aubes de stator à angle de calage variable (souvent désignés VSV, qui est l'acronyme de leur dénomination anglaise "Variable Stator Vanes"). Pour diminuer la masse de ces équipements et de leurs organes de commande, il est envisageable de ne pas installer de VBV. Si l'économie ainsi réalisée est conséquente (on supprime de ce fait les actionneurs, les servovalves, les canalisations, les harnais, etc., qui leur sont associés), les risques induits sont importants, notamment en régime de ralenti si de l'eau ou de la grêle pénètre dans le moteur, entraînant un risque accru d'extinction de celui-ci.

La demande de brevet FR 2 445 439 de la société General Electric Company décrit un moyen unique pour commander des vannes de décharge d'air d'un étage basse pression et des étages de stator à angle de calage variable d'un étage haute pression, mais ce moyen commande les deux équipements essentiellement de façon séquentielle, seules les aubes de stator étant actionnées lors du fonctionnement normal de la turbomachine (c'est à dire au dessus du régime de ralenti).

Le document DE 1224563 décrit aussi un système de commande d'au moins deux équipements à géométrie variable de turbomachine de l'art antérieur.

L'invention vise à proposer une turbomachine avec des équipements à géométrie variable appartenant à des corps différents de la turbomachine et un système de commande de ces équipements qui soit optimisé.

C'est ainsi que l'invention concerne un système de commande d'au moins deux équipements à géométrie variable d'une turbomachine présentant les caractéristiques de la revendication 1.

En utilisant un seul actionneur pour la commande de plusieurs (au moins deux) équipements à géométrie variable, le système de commande permet de réduire le nombre de pièces de la turbomachine et ainsi d'atteindre l'objectif de l'invention. La masse, le volume et le coût d'un second système de commande sont, au moins en grande partie, évités, puisque les équipements des premier et second corps sont actionnés par le même actionneur.

Selon une forme de réalisation, le système de commande est apte à commander plus de deux équipements à géométrie variable à l'aide d'un unique actionneur.

Selon une forme de réalisation, un équipement à géométrie variable est commun à plusieurs corps de la turbomachine.

Selon une forme de réalisation, le premier corps étant entraîné à une vitesse de rotation commandable, l'actionneur est commandé par la vitesse de rotation du premier corps.

Ainsi, l'équipement du second corps est commandé par la vitesse de rotation du premier corps, par le truchement de l'actionneur.

Selon une forme particulière de réalisation le premier corps est un corps haute pression et le deuxième corps un corps basse pression.

En particulier, la turbomachine comportant un compresseur basse pression et un compresseur haute pression, l'équipement à géométrie variable du compresseur basse pression est commandé par la vitesse de rotation du compresseur haute pression.

Selon une forme de réalisation, dans le cas d'une turbomachine avec un corps haute pression et un corps basse pression, les équipements à géométrie variable du corps haute pression se situent à proximité du corps basse pression (par exemple à proximité du côté amont du corps haute pression).

Selon une forme de réalisation particulière dans ce cas, la turbomachine est une turbomachine à double-corps, avec un corps haute pression et un corps basse pression. De préférence dans ce cas, le ou les étages d'aubes de stator à angle de calage variable fait ou font partie du corps haute pression, le premier équipement commandé par le système de commande faisant partie du corps basse pression de la turbomachine.

Selon une forme de réalisation particulière dans ce cas, l'étage d'aubes comporte une pluralité d'aubes, montées chacune de façon pivotante sur un carter de la turbomachine, et un anneau de commande entourant le carter est relié à chacune des aubes de l'étage par l'intermédiaire de leviers, l'actionneur étant apte à entraîner en rotation l'anneau de commande de l'étage par l'intermédiaire d'un organe pilote monté sur le carter.

Selon une forme de réalisation, un équipement à géométrie variable est une vanne de décharge d'air de la turbomachine. Cet équipement peut comprendre une vanne ou une pluralité de vannes de décharge d'air. Il s'agit par exemple d'une vanne de décharge d'air du type VBV au niveau du compresseur basse pression.

Le système de commande de l'invention peut être adapté pour la commande de différents types d'équipements. Outre ceux présentés ci-dessus, les équipements à géométrie variable peuvent notamment comporter ou former un élément de l'un ou plusieurs des dispositifs suivants :
- une vanne de décharge d'air du compresseur haute pression à ouverture proportionnelle (souvent désignée par l'expression anglaise "Transient Bleed Valve" (d'acronyme TBV) ou "Start Bleed valve" (d'acronyme SBV));
- une vanne de décharge d'air du compresseur haute pression tout ou rien (souvent désignée par l'expression anglaise "Handling Bleed Valve" (d'acronyme HBV)) ;
- une vanne de régulation d'un débit d'air contribuant au contrôle de jeu dans une turbine basse pression (souvent désigné par l'expression anglaise "Low Pressure Turbine Active Clearance Control" (d'acronyme LPTACC)), ou dans une turbine haute pression (souvent désigné par l'expression anglaise "High Pressure Turbine Active Clearance Control" (d'acronyme HPTACC)).

Selon une forme de réalisation, dans le système de commande, l'actionneur comporte un organe de commande mobile dont les déplacements transmettent la commande aux équipements à géométrie variable. L'organe de commande peut par exemple comporter le bras d'un vérin.

Selon une forme de réalisation, l'actionneur est agencé pour actionner le premier équipement à géométrie variable en faisant varier un paramètre dans une plage d'actionnement du premier équipement, l'actionneur étant agencé pour actionner le deuxième équipement à géométrie variable en faisant varier le même paramètre dans une plage d'actionnement du second équipement.

Le paramètre de l'actionneur indiqué ci-dessus peut par exemple être la position de l'organe d'actionnement de l'actionneur. Ainsi, ce paramètre peut être la position de l'extrémité du bras d'un vérin. Ainsi, dans ce cas, faire varier ce paramètre signifie déplacer l'extrémité du bras du vérin ou la position de l'extrémité opérante de l'actionneur.

Selon une forme de réalisation, l'actionneur entraîne un organe de renvoi comportant au moins deux branches et monté de façon mobile sur le carter de la turbomachine, une première branche entraînant le premier équipement et une seconde branche entraînant le second équipement.

Selon une forme particulière de réalisation, la seconde branche entraîne en rotation sur une partie de sa course une pièce d'actionnement du second équipement et ne l'entraîne pas sur le reste de sa course, ladite pièce restant au repos sur une butée.

Selon une forme particulière de réalisation, la pièce d'actionnement est un levier mobile autour d'un axe de rotation lié au carter, un premier bras du levier étant destiné à coopérer avec ladite seconde branche et avec ladite butée et le second bras entraînant le second équipement par l'intermédiaire d'un organe de jonction coulissant ménageant une course morte dans l'actionnement dudit second équipement.

Lorsque le paramètre d'actionnement varie dans un intervalle situé en dehors de la plage d'actionnement d'un équipement, ce dernier n'est pas actionné par l'actionneur. Un tel intervalle de valeurs du paramètre de l'actionneur, dans laquelle aucune action n'est effectivement appliquée à l'équipement considéré, constitue pour ledit équipement une "course morte". Dans une telle plage, quelles que soient les variations du paramètre, l'actionneur n'agit pas (ou pas significativement) sur l'équipement considéré.

Selon une forme particulière de réalisation, l'organe de jonction coulissant comporte un premier organe de commande présentant un trou oblong dans lequel coulisse une tige portée par un second organe de commande.

Selon une forme particulière de réalisation, l'axe de rotation du levier est déplaçable le long du premier bras dudit levier.

Selon une forme particulière de réalisation, le premier organe de commande est rappelé par un moyen élastique vers la position correspondant à l'absence de coopération entre la seconde branche et la pièce d'actionnement.

Selon une forme de réalisation particulière, au moins une partie de la plage d'actionnement du premier équipement est hors de la plage d'actionnement de second équipement.

La commande par un actionneur unique de deux équipements à géométrie variable peut être facilitée par le fait que les plages d'actionnements des deux équipements ne se correspondent pas totalement, permettant hors de la zone commune de n'actionner qu'un seul équipement.

Selon une forme de réalisation particulière, la plage d'actionnement de l'un des premier et deuxième équipements est entièrement contenue dans la plage d'actionnement de l'autre équipement.

Dans ce cas, les équipements sont actionnés simultanément dans leur zone commune, ce qui peut présenter des avantages selon la nature des équipements. Une telle forme de réalisation peut permettre de prévoir une amplitude d'actionnement plus importante.

Selon une forme de réalisation particulière dans ce cas, la plage d'actionnement de l'un des équipements a une amplitude très inférieure à l'amplitude totale de la plage d'actionnement de l'autre équipement; par exemple, elle peut représenter moins de 20% ou moins de 10% de cette plage. De la sorte, lorsque la plage de l'équipement à la plage d'actionnement réduite est incluse dans la plage de l'autre équipement, les actions de commande de l'équipement n'entrainent qu'une variation faible et/ou peu sensible de la commande de l'autre équipement. Cette disposition facilite la commande, avec un seul système de commande, de deux équipements.

Le système de commande est de préférence agencé pour que les variations du paramètre de l'actionneur entre les bornes de sa plage d'actionnement suffisent pour actionner les équipements avec une amplitude suffisante.

Selon une forme de réalisation, la liaison entre l'actionneur et l'un des équipements comporte un dispositif de débrayage, apte à débrayer l'entrainement de cet équipement par l'actionneur sur une plage de valeurs du paramètre d'actionnement. Cette plage de valeurs est donc située en dehors de la plage d'actionnement de l'équipement considéré. Ainsi, le dispositif de débrayage permet de réserver un intervalle de la plage d'actionnement à la seule commande de l'autre (ou des autres) équipement(s). Cela peut être essentiel lorsque l'équipement considéré ne doit pas être affecté alors même que la commande de l'un des autres équipements commandés varie.

Selon un mode de réalisation, le système de commande comporte en outre des moyens de rappel maintenant un organe de commande de l'un des équipements dans une position prédéterminée, au moins lorsque le paramètre de l'actionneur varie dans un intervalle situé à l'extérieur de la plage d'actionnement de l'équipement.

L'invention concerne encore une turbomachine équipée d'un système de commande présenté ci-dessus.

L'invention sera mieux comprise à l'aide de la description suivante de la forme de réalisation préférée de la turbomachine et du système de l'invention, en référence aux planches de dessins annexées, sur lesquelles:

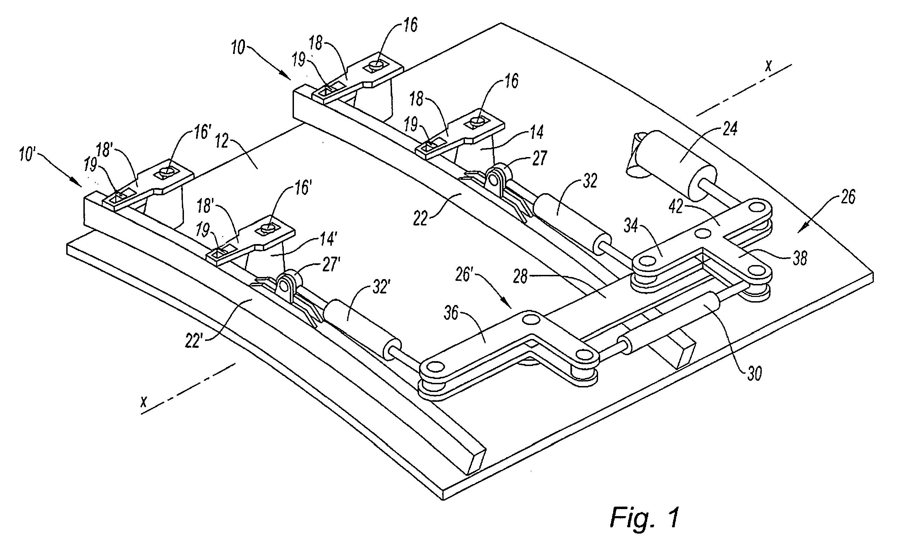

- la figure 1 représente une vue en perspective d'un système de commande de la position d'aubes de stator à calage variable selon l'art antérieur;
- la figure 2 est une vue schématique d'un dispositif de commande de la position des vannes de décharge d'un compresseur à partir de la commande de position des aubes d'un stator à calage variable, selon un mode de réalisation de l'invention ; elle représente ce dispositif dans la position correspond à une vitesse de rotation élevée du moteur (aubes de stator ouvertes et vannes de décharge fermées)
- la figure 3 est une vue schématique du même dispositif à vitesse de rotation du moteur intermédiaire, les aubes de stator étant en cours de fermeture et les vannes de décharge étant toujours fermées ;
- la figure 4 est une vue schématique du même dispositif à faible vitesse de rotation du moteur, les aubes de stator étant fermés et les vannes de décharge ouvertes.
- les figures 5 et 6 sont des courbes donnant la position des aubes de stator et des vannes de décharge en fonction du régime du moteur, dans le cas d'un recouvrement et dans le cas d'une absence de recouvrement des plages d'ouverture et de fermeture des deux équipements.

De manière connue, une turbomachine, ici d'axe X-X, comporte, d'amont en aval, une soufflante, un compresseur basse pression (souvent désigné par le terme de "booster" par l'homme du métier), un compresseur haute pression, une chambre de combustion, une turbine haute pression, une turbine basse pression et une tuyère d'éjection des gaz (non représentés). Le compresseur et la turbine haute pression sont fixés sur un même arbre, dit haute pression, et appartiennent ainsi au corps haute pression de la turbomachine, tandis que le compresseur et la turbine basse pression sont fixés sur un même arbre, dit basse pression, et appartiennent ainsi au corps haute pression de la turbomachine.

Ci-après, on utilisera les abréviations suivantes: BP pour basse pression et HP pour haute pression.

Le compresseur HP comporte au moins un étage formé d'une roue d'aubes mobiles et d'une roue d'aubes fixes (encore dénommées aubes de stator). Chaque étage est formé d'une pluralité d'aubes disposées radialement autour de l'axe X-X de la turbomachine. En l'espèce, le compresseur HP comporte une pluralité d'étages, avec une alternance de roues d'aubes mobiles et de roues d'aubes fixes. Les aubes sont enveloppées par un carter 12 cylindrique qui est centrée sur l'axe X-X de la turbomachine.

Parmi les roues d'aubes fixes, au moins un étage 10 comporte des aubes 14 dites à angle de calage variable. Chaque aube 14 est montée pivotante autour d'un axe 16 (ou pivot) qui traverse le carter 12. La position angulaire de chaque aube 14 peut être réglée par entraînement en rotation de son pivot 16.

L'étage 10 d'aubes à calage variable forme un premier équipement à géométrie variable, appartenant au corps HP (puisqu'il appartient au compresseur HP). Le paramètre variable de cet équipement est l'angle des aubes 14; en l'espèce, toutes les aubes 14 sont entraînées simultanément en rotation, grâce à un anneau 22 de commande de l'étage 10 d'aubes 14.

L'anneau de commande 22 est de forme globalement circulaire; il entoure le carter 12 et est centré sur l'axe X-X de la turbomachine. La modification synchronisée de la position angulaire des aubes 14 est ainsi obtenue par une rotation de l'anneau de commande 22 autour de l'axe X-X de la turbomachine, de manière connue.

La turbomachine comporte un deuxième équipement 110 à géométrie variable. Il s'agit en l'espèce d'une vanne de décharge d'air, du type VBV (ici représentée de manière schématique). Le paramètre variable de cet équipement 110 est l'angle d'ouverture de la vanne de décharge 110. Cet équipement 110 appartient au corps BP de la turbomachine. La fonction de la vanne VBV 110 est de décharger de l'air à la sortie du compresseur BP pour réduire les risques de mauvais fonctionnement de ce compresseur lorsqu'il fonctionne dans des conditions particulières.

Bien entendu, de manière connue, le deuxième équipement 110 pourrait comporter une pluralité de telles vannes.

Le système de commande est agencé pour commander la rotation de l'anneau 22 de commande de l'étage 10 d'aubes à angle de calage variable (premier équipement 10), ainsi que le déplacement d'un organe 115 de commande du second équipement 110.

A cet effet, le système de commande comporte un actionneur 24, en l'espèce un vérin 24, qui est relié mécaniquement au premier équipement 10 et au deuxième équipement 110 pour les entraîner en mouvement. Un actionneur unique 24 commande ainsi deux équipements 10, 110 à géométrie variable de deux corps distincts.

A cet effet, chaque pivot 16 des aubes à calage variable 14 est relié à une extrémité d'une biellette 18 ou levier 18 de commande dont l'autre extrémité est articulée autour d'un tourillon 19 fixé sur l'anneau de commande 22 et s'étendant radialement par rapport à lui.

L'anneau comporte au moins une chape 27 à laquelle est fixée une extrémité d'une bielle 32 de commande, de type ridoir à vis, s'étendant sensiblement tangentiellement à l'anneau 22. L'autre extrémité de la bielle de commande 32 est solidaire d'un organe de renvoi 26 dit pilote (car il est directement relié à l'actionneur 24), monté pivotant sur un boîtier 28 du carter 12 de la turbomachine. L'organe de renvoi pilote 26 est plus précisément de forme en T. La bielle de commande 32 est fixée à une extrémité d'une première branche 34 du T, l'extrémité de la tige du vérin 24 étant fixée, de manière articulée, à l'extrémité de la branche d'actionnement 42 du T qui se trouve dans le prolongement de la première branche 34. La seconde branche 38, perpendiculaire aux deux autres, remplit une autre fonction décrite plus loin. L'organe de renvoi pilote 26 est monté pivotant autour d'un axe 50 s'étendant à l'intersection des branches.

L'actionneur (vérin) 24 peut entraîner en rotation l'anneau de commande 22 de l'étage 10 d'aubes à calage angulaire variable par l'intermédiaire de l'organe de renvoi pilote 26, qui transmet le mouvement du vérin 24 à la bielle de commande 32 qui elle-même transmet le mouvement à l'anneau 22 dont elle est solidaire en translation (curviligne).

L'organe de renvoi pilote 26 et la bielle 32 sont les éléments principaux de la chaine de transmission de mouvement depuis l'actionneur (vérin 24) jusqu'à l'anneau de commande 22.

Le vérin 24 est commandé par une unité de commande électronique. Ses mouvements sont fonction de la vitesse N2 de rotation du compresseur HP.

L'invention a été présentée avec un étage unique d'aubes à calage variable mais elle peut bien entendu être mise en oeuvre avec une pluralité d'étages, les étages étant reliés de manière classique avec un premier renvoi 26, dit renvoi pilote, et des renvois 26', dits renvois suiveurs, entraînés par l'intermédiaire d'une barre de synchronisation 30.

Le système de commande commande également le déplacement d'un organe 115 de commande du second équipement 110, à l'aide d'un dispositif spécifique.

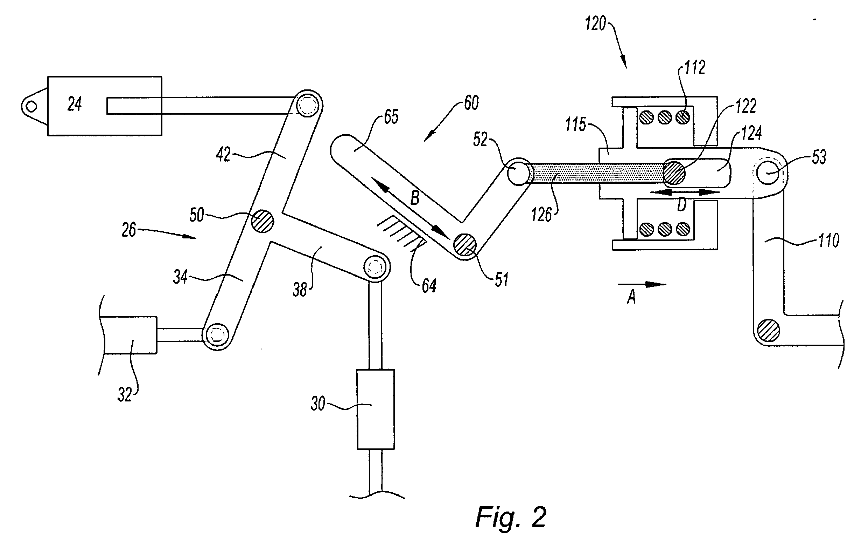

En se référant maintenant aux figures 2 à 4 on voit un dispositif 60 d'actionnement des vannes de décharge à l'aide du système de commande des aubes de stator à calage variable. L'organe de renvoi 26, qui est mobile en rotation autour de l'axe 50, génère le déplacement de la bielle 32 par l'intermédiaire de sa première branche 34, et celui d'une barre de synchronisation 30 par l'intermédiaire de sa seconde branche 38 ; il entraîne également une pièce d'actionnement 65 par l'intermédiaire de sa branche 38. Cette pièce d'actionnement 65 a la forme d'un levier en L, et est mobile en rotation autour d'un premier axe 51 lié au carter 12. Elle est rappelée en permanence par un moyen de rappel élastique, non représenté, vers la seconde branche 38 et repose, en absence de coopération avec la branche 38, sur une butée 64. Un des ses bras est apte à coopérer avec la seconde branche 38 pour transmettre la rotation de l'organe de renvoi 26 à un étrier 126 en forme de U qui est attaché au second bras de la pièce 65 par une seconde articulation 52. Une rotation de l'organe de renvoi 26 se traduit par un déplacement longitudinal de l'étrier 126 qui se déplace comme une type bielle se déplaçant dans un coulisseau.

Les deux branches de l'étrier 126 passent de part et d'autre d'un premier organe de commande 115 de la géométrie variable 110, qui commande les déplacements de l'équipement à géométrie variable 110 suivant la direction indiquée par la flèche A. Cet organe de commande 115 se présente comme une plaque rectangulaire percée d'un trou oblong 124. Les deux branches de l'étrier 126, formant un second organe pour la commande du second équipement 110, sont reliées par une tige 122 qui passe à travers le trou oblong 124, dans lequel elle coulisse.

L'étrier 126 et la tige 122 constituent l'organe de jonction coulissant 120. L'actionneur 24 entraine le second équipement 110 via cet organe de jonction coulissant 120, dont le coulissement définit une course morte D. En effet, tant que la tige 122 se déplace à l'intérieur du trou allongé 124 sans être bloquée à une extrémité de celui-ci, cela n'entraine aucun mouvement de l'organe de commande 115, en d'autres termes les mouvements de l'actionneur (le vérin 24) n'entrainent aucun mouvement de l'organe de commande 115 de l'équipement 110.

En l'absence d'action de la part de l'organe de renvoi 26 sur la pièce d'actionnement 65, un ressort 112 repousse l'organe de commande 115 et maintient le deuxième équipement 110 dans la position correspondant à la position fermée des vannes de décharge. Le ressort de rappel de la pièce 65 fait tourner celle-ci autour de la seconde articulation 52 jusqu'à ce qu'elle vienne contre la butée 64 qui limite la rotation de la pièce d'actionnement dans le sens de la fermeture des aubes du stator. Elle est ensuite maintenue en appui contre la butée 64 par le moyen de rappel élastique mentionné plus haut.

Enfin la pièce d'actionnement 65 a, comme représenté sur les figures 2 à 4, la forme d'un L dont les deux bras se rejoignent au niveau du premier axe de rotation 51. La longueur de son premier bras, c'est-à-dire du bras qui coopère avec la branche 38 du renvoi 26, peut être réduite en déplaçant le point où elle est fixée sur l'axe de rotation. Ce déplacement a pour effet de modifier la démultiplication du mouvement existant entre la rotation du renvoi 26 et le déplacement de l'étrier 126. L'amplitude de cette modification de la démultiplication est déterminée par la course B le long de laquelle peut se déplacer l'axe de rotation 51.

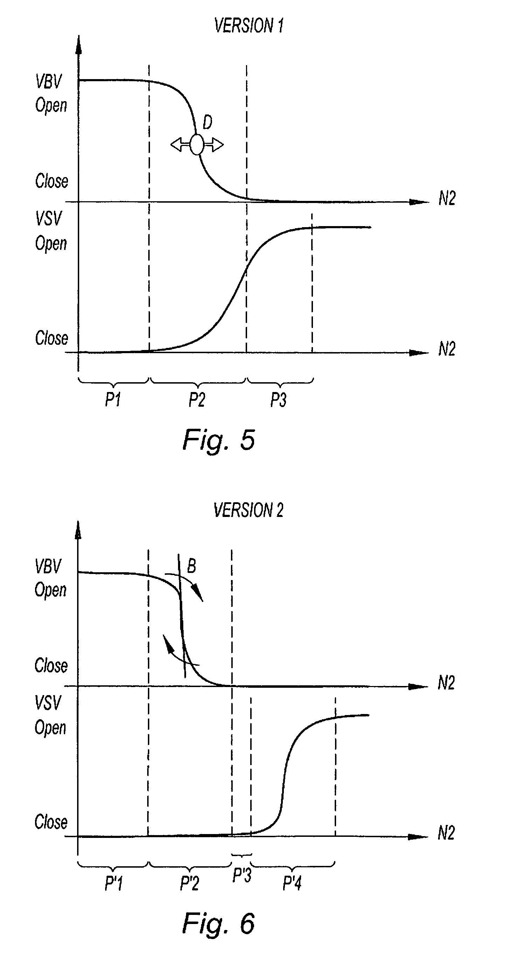

En se référant aux figures 5 et 6 on voit les lois d'ouverture relative des aubes à calage variable (référencées VSV) et des vannes de décharge (référencées VBV) en fonction de la vitesse de rotation N2 du corps HP. Plus la valeur de la courbe est importante, plus l'équipement à géométrie variable 10, 110 correspondant est ouvert. La position ouverte des aubes VSV 14 correspond à la position dans laquelle elles laissent passer le flux d'air le plus important dans le compresseur HP 3; la position ouverte des vannes VBV 110 correspond à la position dans laquelle elles prélèvent le débit maximal d'air du compresseur BP.

Dans une première phase P1, à bas régime, les vannes de décharge VBV 110 sont ouvertes tandis que les aubes à calage variable VSV 14 sont fermées. Dans une deuxième phase P2, à régime intermédiaire, les vannes VBV 110 sont progressivement fermées au fur et à mesure de l'augmentation de la vitesse N2 du corps HP tandis que les aubes VSV 14 sont progressivement ouvertes au fur et à mesure de l'augmentation de la vitesse N2 du corps HP; en fin de deuxième phase P2, les vannes VBV 110 sont presque complètement fermées tandis que les aubes VSV 14 sont à peu près aux deux tiers ouvertes. Dans une troisième phase P3, la fermeture des vannes VBV 110 est finalisée tandis que l'ouverture des aubes VSV 14 est progressivement finalisée, au fur et à mesure de l'augmentation de la vitesse N2 du corps HP.

Ainsi, les deux équipements à géométrie variable 10, 110 sont pilotés par le régime du corps HP. En particulier, les vannes VBV 110, appartenant au corps BP, sont commandées par la vitesse de rotation N2 du corps HP. Il en résulte une simplification de la définition des lois d'ouverture et la garantie de la bonne synchronisation entre les ouvertures et fermetures des équipements à géométrie variable, puisque ces ouvertures et fermetures dépendent d'un même et unique paramètre: la vitesse de rotation N2 du corps HP.

Dans la version V1 représentée sur la figure 5 l'ouverture des aubes à calage variables VSV débute en même temps que la fermeture des vannes de décharge VBV mais se termine après, alors que dans la version V2, représentée par la figure 6, elle ne débute qu'après leur fermeture. Le choix d'une version, et le moment précis où débute la fermeture des vannes de décharge, sont définis en jouant sur la position et sur la longueur D du trou oblong 124. Un allongement ou un raccourcissement de cette lumière décale dans un sens ou dans l'autre, l'ouverture des vannes de décharge par rapport à la fermeture des aubes à calage variable.

Comme indiqué précédemment une modification du positionnement du premier axe de rotation 51 sur le premier bras de la pièce d'actionnement 65, dans la limite de la course B, provoque une modification de la démultiplication du mouvement généré par la rotation du renvoi 26. Un raccourcissement du bras du L augmente la rotation de la pièce d'actionnement 65 pour une rotation donnée du renvoi 26, ce qui se traduit par une ouverture plus rapide des vannes de décharge et une tangente au point d'inflexion de la courbe VBV sur la figure 6 plus verticale. Inversement un agrandissement du bras de levier sur le premier bras de la pièce d'actionnement 65 produira une tangente au point d'inflexion de la courbe sur la figure 6 moins verticale et une ouverture des vannes de décharge plus progressive.

Pour faire comprendre le fonctionnement du système de commande 1, les figures 2 à 4 illustrent le mouvement de ce système dans trois positions, correspondant à une extension maximale, intermédiaire et minimale du vérin 24. Dans le système de commande 1, l'extension du vérin 24 est le paramètre d'actionnement de cet actionneur.

On va maintenant décrire le fonctionnement des aubes de stator et des vannes de décharge au cours d'une modification de la vitesse de rotation N2 du corps HP, en prenant pour exemple une décélération du moteur à partir de la position du plein gaz. En situation initiale (figure 2), le vérin est en position d'extension maximale ; les aubes 14 à angle de calage variable sont en position ouverte et les vannes de décharge fermées. La branche 38 de l'organe de renvoi 26 est éloignée du premier bras de la pièce d'actionnement 65 qui repose contre la butée 64, sous l'action du moyen de rappel élastique de la pièce 65. Le ressort 112 maintient l'organe de commande 115 dans la position correspondant aux vannes de décharge fermées.

A partir de cette position, l'actionnement du vérin 24 provoque une rotation du renvoi pilote 26, et le cas échéant celle d'un renvoi suiveur 26' entrainé par la barre de synchronisation 30. La rotation du renvoi 26 autour de son point de pivotement sur le boîtier 28 entraîne à son tour la bielle 32 qui fait alors tourner dans un sens ou dans l'autre l'anneau 22 autour de l'axe X-X de la turbomachine. Comme indiqué précédemment, la rotation de l'anneau 22 provoque une modification synchronisée de la position angulaire des aubes 14 de l'étage 10 par l'intermédiaire des leviers de commande 18.

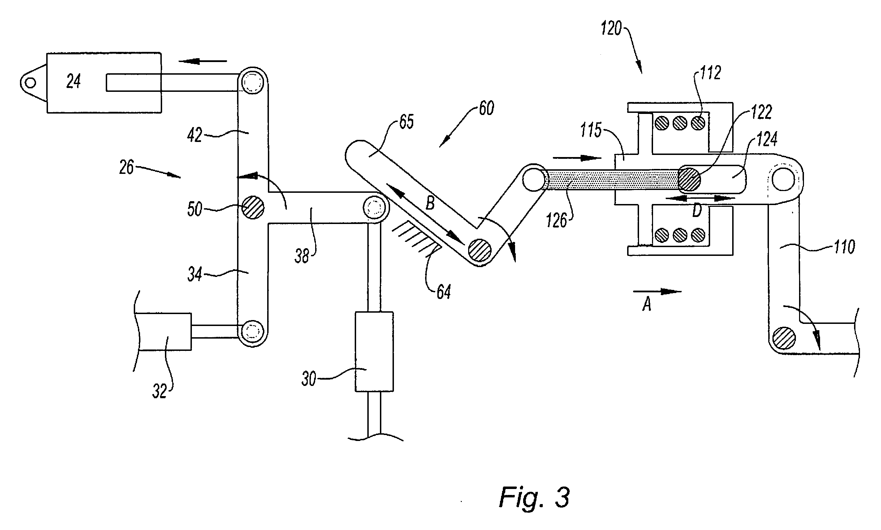

La vitesse de rotation diminuant, le renvoi 26 tourne jusqu'au moment où sa seconde branche 38 vient en contact avec le premier bras de la pièce d'actionnement 65, comme illustré sur la figure 3 qui correspond à une position spécifique au cours de la contraction du vérin 24.

Le vérin 24 se contractant encore, le renvoi 26 commence à faire tourner la pièce d'actionnement 65 autour de son axe de rotation 51 et par suite à pousser la tige 122 de l'étrier 126 dans le trou oblong 124, dans la direction de la flèche A. La position représentée sur la figure 3 est spécifique en ce qu'elle correspond au moment précis où la tige 122 solidaire de l'étrier 126 arrive en butée à l'extrémité du trou 124 dans la direction de la flèche A (qui est la direction d'actionnement pour l'organe de commande 115), position à partir de laquelle la tige 122 commence à entrainer l'organe de commande (plaque 115) de la géométrie variable 110. Inversement depuis le début de la contraction du vérin 24, et jusqu'à cette position, l'organe de commande 115 n'est pas déplacé de sa position initiale (figure 2) malgré le déplacement de l'étrier 126. Aussi, la plage d'actionnement du vérin 24, entre sa position initiale (figure 2) et la position intermédiaire spécifique de la figure 3, constitue une course morte D pour le second équipement commandé 110. Au cours de ce mouvement les vannes du stator se sont fermées progressivement tandis que les vannes de décharge sont restées plein fermées.

En revanche, à partir de la position de début d'actionnement apparaissant sur la figure 3, toute contraction supplémentaire du vérin 24 conduit la tige 122 solidaire de l'étrier 126 à repousser, dans la direction de la flèche A, l'organe de commande 115 et entraine un déplacement de celui-ci. Les positions du vérin 24 contractées davantage que dans cette position constituent la plage d'actionnement du second équipement 110. Les vannes de décharge s'ouvrent en conséquence. Cette ouverture s'effectue plus ou moins progressivement selon le réglage B retenu pour la longueur du bras de levier de la pièce d'actionnement 65.

Il faut noter de plus que, dès lors que le vérin 24 dépasse cette position de début d'actionnement, le ressort 112 agit comme moyen de rappel pour maintenir l'organe de commande 115 en contact permanent avec la tige 122. Ainsi, hors de la course morte, l'organe de commande 115 suit à chaque instant les déplacements de la tige 122, dans la direction de la flèche A comme dans la direction opposée. Inversement, dans la course morte de l'organe de jonction coulissant 120, l'organe de commande 115 reste bloqué, en position 'gauche' sur les figures 2 et 3, sous l'effet du moyen de rappel élastique de la pièce d'actionnement 65.

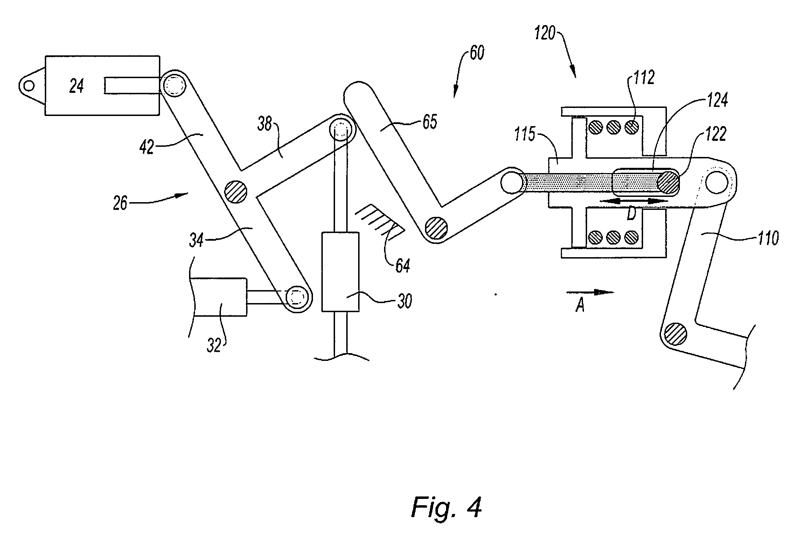

La vitesse de rotation poursuivant sa réduction, le vérin est commandé vers la pleine rétraction, ce qui correspond à des vannes de décharge complètement ouvertes et à une poursuite de la fermeture des aubes de stator, jusqu'à leur pleine fermeture (position illustrée sur la figure 4).

Dans le sens de l'augmentation de la vitesse de rotation N2 à partir du régime de ralenti, le vérin 24 s'étend et fait tourner l'organe de renvoi 26 dans le sens inverse au sens précédent. Sous l'action de son moyen de rappel élastique la pièce d'actionnement 65 revient vers sa butée 64 entraînant avec elle l'étrier 126. L'organe de commande 115 n'étant plus soumis à la pression de la tige 122 accompagne, sous l'action du ressort 112, l'étrier 126 dans son déplacement ce qui déclenche la fermeture des vannes de décharge. Le mouvement de l'organe de commande 115 se poursuit jusqu'à ce que le ressort 112 soit complètement détendu puis la tige 122, toujours entraînée par le moyen de rappel élastique de la pièce d'actionnement, parcourt le trou oblong 124 jusqu'à venir en butée contre l'autre extrémité de ce trou. L'ensemble pièce d'actionnement 65, étrier 126 et organe de commande 115 continue sa course jusqu'à ce que le premier bras de la pièce d'actionnement 65 vienne achopper sur la butée 64.

Dans cette position les vannes de décharge sont entièrement fermées. L'ouverture des aubes de stator, quant à elle, se poursuit avec la rotation du renvoi 26 dont le mouvement à partir de cet instant n'interfère plus avec celui des vannes de décharge.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de commande d'au moins deux équipements (10, 110) à géométrie variable d'une turbomachine, la turbomachine comportant au moins un premier corps et un deuxième corps, le premier équipement (10) étant un étage d'aubes de stator à angle de calage variable d'un compresseur du premier corps évoluant entre une position fermée au ralenti et une position ouverte à fort régime, le second équipement (110) étant au moins une vanne de décharge d'un compresseur du deuxième corps évoluant entre une position ouverte au ralenti et une position fermée à fort régime, le système comportant en outre un actionneur (24) entraînant un organe de renvoi (26) comportant au moins deux branches et monté de façon mobile sur le carter (12) de la turbomachine, une première branche (34) entraînant le premier équipement (10) et une seconde branche (38) entraînant le second équipement (110) **caractérisé par le fait que** la seconde branche (38) entraîne en rotation sur une partie de sa course une pièce (65) d'actionnement du second équipement (110) et ne l'entraîne pas sur le reste de sa course, ladite pièce (65) restant au repos sur une butée (64).

2. Système de commande selon la revendication 1 dans lequel le premier corps est un corps haute pression et le deuxième corps un corps basse pression.

3. Système de commande selon l'une des revendications 1 ou 2 dans lequel l'actionneur (24) est commandé par la vitesse de rotation d'un des corps de la turbomachine.

4. Système de commande selon la revendication 3 dans lequel l'actionneur (24) est commandé par la vitesse de rotation du corps haute pression.

5. Système de commande selon la revendication 4 dans lequel la pièce d'actionnement (65) est un levier mobile autour d'un axe de rotation (51) lié au carter (12), un premier bras du levier étant destiné à coopérer avec ladite seconde branche (38) et avec ladite butée (64) et le second bras entraînant le second équipement (110) par l'intermédiaire d'un organe de jonction coulissant (120) ménageant une course morte dans l'actionnement dudit second équipement.

6. Système de commande selon la revendication 5 dans lequel l'organe de jonction coulissant (120) comporte un premier organe de commande (115) présentant un trou oblong (124) dans lequel coulisse une tige (122) portée par un second organe de commande (126).

7. Système de commande selon l'une des revendications 5 ou 6 dans lequel l'axe de rotation (51) du levier (65) est déplaçable le long du premier bras dudit levier (65).

8. Système de commande selon l'une des revendications 6 ou 7 dans lequel le premier organe de commande (115) est rappelé par un moyen élastique (112) vers la position correspondant à l'absence de coopération entre la seconde branche (38) et la pièce d'actionnement (65).

9. Système de commande selon l'une des revendications 4 à 7 dans lequel la plage d'actionnement du second équipement (110) est incluse dans la plage de fonctionnement du premier équipement (10).

10. Turbomachine comportant un système de commande selon l'une des revendications ci-dessus.

## Claims

1. A system for controlling at least two variable geometry equipment items (10, 110) of a turbine engine, the turbine engine comprising at least one first core and a second core, the first equipment item (10) being a variable angle stator vane stage of a compressor of the first core moving between a closed position when idling and an open position at high speed, the second equipment item (110) being at least one bleed valve of a compressor of the second core moving between an open position when idling and a closed position at high speed, the system including an actuator (24) driving a return member (26) comprising at least two branches and mounted to move on the casing (12) of the turbine engine, a first branch (34) driving the first equipment item (10) and a second branch (38) driving the second equipment item (110), **characterized in that** the second branch (38) drives in rotation, over part of its travel, an actuation part (65) for the second equipment item (110) and does not drive it over the remainder of its travel, said part (65) remaining at rest on an end stop (64).

2. The control system as claimed in claim 1, in which the first core is a high pressure core and the second core a low pressure core.

3. The control system as claimed in one of claims 1 or 2, in which the actuator (24) is controlled by the speed of rotation of one of the cores of the turbine engine.

4. The control system as claimed in claim 3, in which the actuator (24) is controlled by the speed of rotation of the high pressure core.

5. The control system as claimed in claim 4, in which the actuation part (65) is a lever that moves about a rotation axis (51) linked to the casing (12), a first arm of the lever being intended to cooperate with said second branch (38) and with said end stop (64) and the second arm driving the second equipment item (110) via a sliding junction member (120) forming a dead travel in the actuation of said second equipment item.

6. The control system as claimed in claim 5, in which the sliding junction member (120) comprises a first control member (115) having an oblong hole (124) in which slides a rod (122) supported by a second control member (126).

7. The control system as claimed in one of claims 5 or 6, in which the rotation axis (51) of the lever (65) can be displaced along the first arm of said lever (65).

8. The control system as claimed in one of claims 6 or 7, in which the first control member (115) is returned by an elastic means (112) toward the position corresponding to the absence of cooperation between the second branch (38) and the actuation part (65).

9. The control system as claimed in one of claims 4 to 7, in which the actuation band of the second equipment item (110) is included within the operating band of the first equipment item (10).

10. A turbine engine comprising a control system as claimed in one of the above claims.

## Patentansprüche

1. System zum Steuern von zumindest zwei Geräten (10, 110) mit variabler Geometrie eines Turbinentriebwerks, wobei das Turbinentriebwerk zumindest einen ersten Körper und einen zweiten Körper umfasst, und das erste Gerät (10) eine Statorschaufelstufe mit variablem Anstellwinkel eines Kompressors des ersten Körpers ist, die sich zwischen einer geschlossenen Stellung im Leerlauf und einer offenen Stellung mit hoher Drehzahl bewegt, und das zweite Gerät (110) zumindest ein Ablassventil eines Kompressors des zweiten Körpers ist, das sich zwischen einer offenen Stellung im Leerlauf und einer geschlossenen Stellung mit hoher Drehzahl bewegt, wobei das System darüber hinaus ein Stellglied (24) umfasst, das eine Umlenkvorrichtung (26) antreibt, die zumindest zwei Äste umfasst und beweglich auf dem Gehäuse (12) des Turbinentriebwerks montiert ist, wobei ein erster Ast (34) das erste Gerät (10) antreibt und ein zweiter Ast (38) das zweite Gerät (110) antreibt, durch die Tatsache gekennzeichnet, dass der zweite Ast (38) auf einem Teil seines Hubes ein Bauteil (65) zum Betätigen des zweiten Gerätes (110) zum Drehen bringt, und es auf dem Rest seines Hubes nicht antreibt, wobei das besagte Bauteil (65) an einem Anschlag (64) liegen bleibt.

2. Steuerungssystem nach Anspruch 1, bei dem der erste Körper ein Hochdruckkörper und der zweite Körper ein Niederdruckkörper ist.

3. Steuerungssystem nach einem der Ansprüche 1 oder 2, bei dem das Stellglied (24) durch die Drehzahl eines der Körper des Turbotriebwerks angesteuert wird.

4. Steuerungssystem nach Anspruch 3, bei dem das Stellglied (24) durch die Drehzahl des Hochdruckkörpers angesteuert wird.

5. Steuerungssystem nach Anspruch 4, bei dem das Betätigungsbauteil (65) ein Hebel ist, der sich um eine Rotationsachse (51) bewegt, die mit dem Gehäuse (12) verbunden ist, wobei ein erster Arm des Hebels dazu bestimmt ist, mit dem besagten zweiten Ast (38) und mit dem besagten Anschlag (64) zusammenzuwirken, und der zweite Ast das zweite Gerät (110) über ein gleitendes Verbindungsorgan (120) antreibt, das beim Betätigen des besagten zweiten Gerätes einen Leerhub ausführt.

6. Steuerungssystem nach Anspruch 5, bei dem das gleitende Verbindungsorgan (120) ein erstes Steuerungsorgan (115) umfasst, das ein Langloch (124) aufweist, in dem eine Stange (122) verfährt, die von einem zweiten Steuerorgan (126) getragen wird.

7. Steuerungssystem nach einem der Ansprüche 5 oder 6, bei dem die Rotationsachse (51) des Hebels (65) entlang des ersten Armes des besagten Hebels (65) verschoben werden kann.

8. Steuerungssystem nach einem der Ansprüche 6 oder 7, bei dem das erste Steuerungsorgan (115) durch eine elastische Vorrichtung (112) in die Stellung zurückgezogen wird, die jener entspricht, in der es kein Zusammenwirken zwischen dem zweiten Ast (38) und dem Betätigungsbauteil (65) gibt.

9. Steuerungssystem nach einem der Ansprüche 4 bis 7, bei dem der Betätigungsbereich des zweiten Gerätes (110) im Betriebsbereich des ersten Gerätes (10) enthalten ist.

10. Turbinentriebwerk umfassend ein Steuerungssystem nach einem der oben genannten Ansprüche.
